# EUROPÄISCHE PATENTSCHRIFT

(11) **EP 1 724 412 B1**
(45) Veröffentlichungstag und Bekanntmachung des Hinweises auf die Patenterteilung: **02.11.2011**
(21) Anmeldenummer: 06007785.6
(22) Anmeldetag: 13.04.2006
(51) Int. Cl.: E04F 13/08, F16B 5/02, F16B 13/00

(54) **Abstandshalter und Verfahren für die Befestigung eines Gegenstandes an einem eine Dämmschicht aufweisenden Untergrund**
Spacer and method for fixing an article to a support with an exterior insulating layer
Espaceur et procédé pour fixer un article sur un support muni d'une couche d'isolation extérieure

(30) Priorität: 14.05.2005 DE 102005022449
(43) Veröffentlichungstag der Anmeldung: 22.11.2006
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- EP-A- 1 293 685
- DE-A1- 10 249 993
- DE-A1- 10 361 751
- DE-U1- 20 317 103
- DE-U1- 20 320 600

## Beschreibung

Die Erfindung betrifft einen Abstandshalter für die Befestigung eines Gegenstandes an einem eine Dämmschicht aufweisenden Untergrund mit den Merkmalen des Oberbegriffs des Anspruchs 1.

Zur Befestigung von Gegenständen an Wänden, die mit einer Dämmschicht versehen sind, gibt es entweder die Möglichkeit, eine Verankerung in der Dämmschicht selbst oder durch diese hindurch in der Wand als Untergrund vorzunehmen. Allerdings kommt eine Verankerung in der Dämmschicht in der Regel nur bei geringen zu erwartenden Lasten in Frage, also beispielsweise zur Befestigung von Briefkästen, Lampen oder dergleichen. Da Dämmschichten, beispielsweise aus Polystyrol, selbst nur über eine geringe Steifigkeit und Festigkeit verfügen, ist dagegen für schwerere Gegenstände, beispielsweise Markisen, eine Befestigung im Untergrund, d.h. dem tragenden Mauerwerk, unerlässlich.

Aus der Druckschrift EP 1 293 685 A2 ist ein Abstandshalter für die Befestigung eines Gegenstandes an einem eine Dämmschicht aufweisenden Untergrund bekannt, der einen Ankerbolzen und eine auf den Ankerbolzen aufgeschraubte Abstandshülse aufweist. Der Ankerbolzen ist mit einem Dübel im Untergrund verankert. Die Abstandshülse bildet ein Auflager für den zu befestigenden Gegenstand, der an der Abstandshülse mittels einer Schraube befestigt werden kann. Die Druckschriften DE 102 49 993 A1, DE 203 17 103 U1 und DE 103 61 751 A1 zeigen ähnliche Abstandshalter. Das deutsche Gebrauchsmuster DE 203 20 600 U1 zeigt zudem einen Dämmstoffdübel, der statt eines sonst üblichen Dämmstofftellers ein Kopfteil aus Kunststoff mit konischer Außenkontur und einer Fräseinrichtung an seinem äußeren Umfang aufweist. Die Fräseinrichtung umfasst Fräsrippen, die das Eindringen des Kopfteils in eine Wärmedämmplatte beim Einschrauben des Dämmstoffhalters erleichtern.

Aus der Druckschrift EP 1 293 685 B1 ist es bekannt, einen Abstandshalter vorzusehen, bei dem ein Ankerbolzen in Form einer Distanzschraube mit zwei im Abstand angeordneten Gewindeabschnitten mit einem Spreizdübel im Untergrund befestigt wird. Auf diesen Ankerbolzen wird eine Abstandshülse bis zu einem inneren Anschlag aufgeschraubt. Ankerbolzen und Abstandshülse sind derart angeordnet, dass die dem Untergrund abgewandte Stirnseite der Abstandshülse mit der Dämmstoffschicht, beziehungsweise einem darauf aufgebrachten Putz, abschließt. Diese Stirnseite bildet einen Anschlag, gegen den der zu befestigende Gegenstand mittels einer Befestigungsschraube fixiert werden kann. Dazu wird die Befestigungsschraube in eine Aufnahmebohrung der Abstandshülse eingeschraubt.

Der bekannte Abstandshalter ist allerdings aufgrund seiner Dimensionierung nur für mittlere Lasten geeignet. Für hohe Betriebskräfte, wie sie beispielsweise bei Markisen auftreten können, müssten die einzelnen Bauteile deutlich verstärkt werden. Insbesondere die Abstandshülse benötigt, sofern sie aus Kunststoff sein soll, einen deutlich größeren Durchmesser als der Ankerbolzen. Hierfür ist in der Dämmstoffschicht jedoch kein Platz.

Der Erfindung liegt daher die Aufgabe zugrunde, einen Abstandshalter zu schaffen, der für höhere Lasten geeignet und einfach montierbar ist.

Diese Aufgabe wird erfindungsgemäß durch die Merkmale des Anspruchs 1 gelöst. Der erfindungsgemäße Abstandshalter weist eine Abstandshülse mit einer Fräseinrichtung an ihrem äußeren Umfang auf. Durch Drehen der Abstandshülse kann so die ursprünglich zylindrische Bohrung für den Ankerbolzen im Bereich der späteren Anordnung der Abstandshülse stark aufgeweitet werden ohne dass hierfür zusätzliches Spezialwerkzeug notwendig ist. Bei radial wirkenden Kräften, die durch den Befestiaunasaeaenstand auf die Abstandshülse und den Ankerbolzen übertragen werden, kommt es zwangsläufig, wenn auch nur in geringem Maße, zu einer Biegung des Ankerbolzens. Damit hierdurch bei einem ggf, vorhandenen Putz dieser nicht beschädigt wird, weist die Abstandshülse an den dem Ankerbolzen abgewandte Ende eine Außendurchmesser-Veriüngung auf. Diese bewirkt, dass im Falle einer Biegung des Ankerbolzens die Abstandshülse im Bereich eines Putzes nicht an diesem anliegt und hierdurch eine Beschädigung ausgeschlossen wird.

In einer bevorzugten Ausführungsform ist der Abstandshalter in unterschiedlichen axialen Positionen gegen ein Verdrehen der Abstandshülse gegenüber der Ankerstange sicherbar. Damit kann der Ankerbolzen in axialer Richtung grob positioniert und die Justage allein durch die Abstandshülse vorgenommen werden. Sobald die Justage erfolgt ist, kann die Drehsicherung vorgenommen werden. Durch das spätere Einschrauben einer Befestigungsschraube kommt es nicht zu einem Verdrehen und damit axialen Verstellen der Abstandshülse gegenüber der Ankerstange. Zur axialen Justage ist damit ein Verdrehen des Ankerbolzens nicht notwendig, wodurch der Justagevorgang deutlich vereinfacht wird, insbesondere wenn eine chemische Befestigung verwendet werden soll.

Vorzugsweise wird als Sicherung gegen Verdrehen eine axial verstellbare Kontereinrichtung für den Ankerbolzen verwendet. Diese kann beispielsweise in Form einer Madenschraube ausgeführt sein. Hierdurch ist ein besonders einfacher Aufbau mit Standardbauteilen möglich. Grundsätzlich ist es jedoch auch denkbar, dass die Abstandshülse nicht durch eine Konterung des Ankerbolzens gegen Verdrehen gesichert wird, sondern durch Flügel, Rippen oder dgl. am Umfang, welche in eine Dämmschicht oder dgl. eingreifen.

Vorzugsweise weist die Abstandshülse eine sich in Richtung des Ankerbolzens konisch verjüngende Außenkontur auf. Dies begünstigt das Aufweiten der auf den Ankerbolzen ausgerichteten zylindrische Bohrung in der Dämmschicht durch die Abstandshülse.

Sofern metrische Befestigungsschrauben verwendet werden sollen, weist die Abstandshülse vorzugsweise eine Aufnahmebohrung mit Gewinde auf.

Um die Ausbildung einer Wärmebrücke zvlischen Befestigungsgegenstand 1 Um die Ausbildung einer Wärmebrücke zwischen Befestigungsgegenstand und Untergrund so weit wie möglich zu reduzieren, schlägt die Erfindung vor, die Abstandshülse und die ggf. vorhandene Kontereinrichtung als Kunststoffteile auszuführen. Aufgrund der erforderlichen Stabilität wird dies in der Regel nicht für den Ankerbolzen möglich sein. Dieser ist vorzugsweise als Gewindestange ausgeführt, welche durch eine chemische Befestigung im Untergrund verankert wird.

Die Erfindung wird nachfolgend anhand eines in der Zeichnung dargestellten Ausführungsbeispiels näher erläutert. Es zeigen:
- Figur 1: zwei erfindungsgemäße Abstandshalter in einer perspektivischen Schnittdarstellung; und
- Figur 2: Detail X aus Figur 1 in vergrößerter Darstellung.

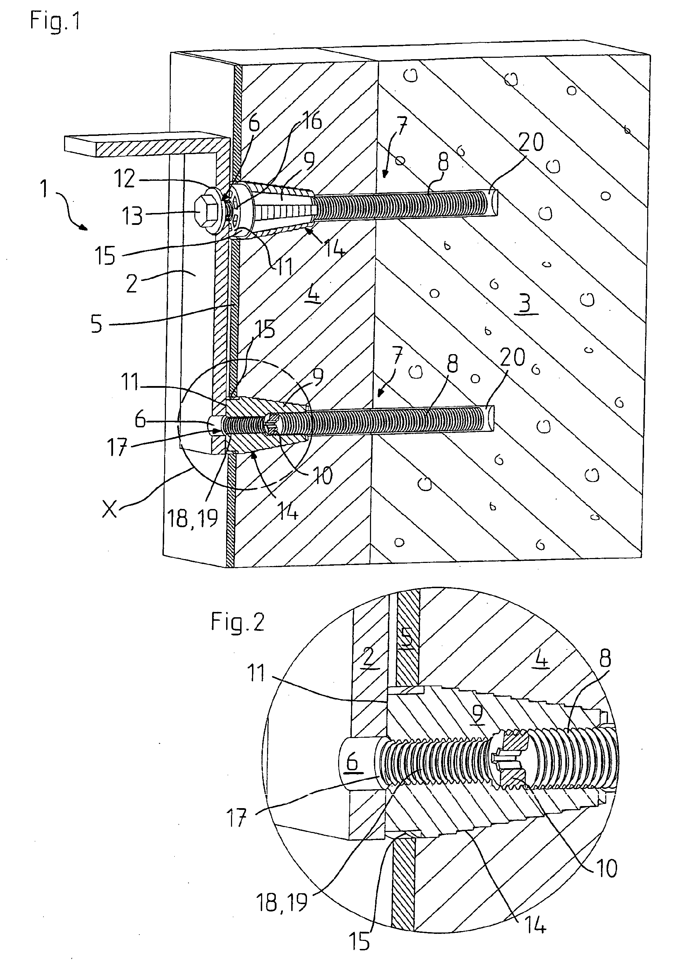

Die in Figur 1 gezeigte Befestigungsanordnung 1 dient der Befestigung eines Gegenstandes 2 an einem Untergrund 3. Auf den Untergrund 3 ist eine Dämmschicht 4, beispielsweise aus einem Polystyrol, sowie hierauf eine Putzschicht 5 angeordnet. Die Dämmschicht 4 dient der Wärmeisolierung des Untergrundes, kann jedoch aufgrund seiner geringen Festigkeit nicht die Betriebskräfte, die an dem Gegenstand 2 zu erwarten sind, aufnehmen. Die Putzschicht 5 dient der Herstellung einer optisch ansprechenden Oberfläche sowie dem Schutz gegen Witterungseinflüsse. Der Gegenstand 2 ist vereinfacht als Winkelstück mit zwei Befestigungsbohrungen 6
dargestellt. Es kann sich hierbei um eine Konsole zur Befestigung einer Markise, eines Vordaches oder dergleichen handeln.

Um die zu erwartenden Betriebskräfte am Gegenstand auf den Untergrund 3 zu übertragen, weist die Befestigungsanordnung zwei erfindungsgemäße Abstandshalter 7 auf. In der Figur 1 ist der obere Abstandshalter 7 ungeschnitten dargestellt, während der untere Abstandshalter 7 teilweise geschnitten dargestellt ist. Die Abstandshalter 7 weisen einen als Gewindestange 8 ausgeführten Ankerbolzen auf, der mit einer nicht dargestellten aushärtbaren Masse im Untergrund 3 verankert ist. An seiner dem Untergrund 3 abgewandten Ende ist eine Abstandshülse 9 auf die Gewindestange 8 aufgeschraubt. Mit einer Madenschraube 10 als Kontereinrichtung ist die Abstandshülse 9 gegen Verdrehen gesichert. Gegen die dem Untergrund 3 abgewandte Stirnseite 11 ist der Gegenstand 2 mit einer Unterlegscheibe 12 und einer Befestigungsschraube 13 verspannt. Der Übersicht halber sind die Unterlegscheibe 12 und die Befestigungsschraube 13 bei dem unteren Abstandshalter 7 nicht dargestellt.

Die Abstandshülse 9 weist eine im Wesentlichen konisch in Richtung des Untergrundes 3 sich verjüngende Außenkontur auf, an der eine Fräseinrichtung 14 in Form stufenartiger, teilweise umlaufender Zähne angeordnet ist. An seinem dem Untergrund 3 abgewandten Ende weist die Außenkontur der Abstandshülse 9 eine Außendurchmesser-Verjüngung 15 und an der angrenzenden Stirnseite 11 eine Werkzeugaufnahme 16 auf. Konzentrisch im Inneren der Abstandshülse 9 ist eine durchgehende Bohrung 17 angeordnet. Der dem Untergrund 3 zugewandte Teil dieser Bohrung 17 ist mit einem größeren, der Gewindestange 8 entsprechenden Innengewinde, sowie einem sich hieran anschließenden engeren Gewinde 18 zur Ausbildung einer Aufnahmebohrung 19 für die Befestigungsschraube 13 versehen.

Zur Erstellung der Befestigungsanordnung 1 wird zunächst mit einem konventionellen Bohrer ein zylindrisches Loch durch die Putzschicht 5 und die Dämmschicht 4 bis in den Untergrund 3 erstellt. In einem weiteren Schritt wird durch drehendes Eintreiben der Abstandshülse 9 in die Putzschicht 5 und die Dämmschicht 4 das zylindrische Loch für die Abstandshülse 9 aufgeweitet. Dies kann beispielsweise durch Aufstecken der Abstandhülse 9 auf einen Akkuschrauber oder dergleichen erfolgen. Die Fräseinrichtung 14 dient beim Eintreiben der Abstandshülse 9 der fräserartigen Zerkleinerung der Putzschicht 5 und der Dämmschicht 4. Im Weiteren wird der entstandene Aufnahmeraum 20 für den Abstandshalter 7 beispielsweise durch Ausblasen gereinigt. Die Gewindestange 8 wird in die Abstandshülse 9 eingeschraubt, und zwar so weit wie möglich, d.h. die Madenschraube 10 wird zuvor so weit wie möglich in Richtung der Aufnahmebohrung 19 geschraubt. Dieser Schritt kann bereits vor dem Auffräsvorgang erfolgen, d.h. der konische Teil des Aufnahmeraums 20 kann mit einer auf die Ankerhülse 9 aufgeschraubten Gewindestange erfolgen.

Nach dem Reinigen des Aufnahmeraums 20 wird eine aushärtbare Masse in den Aufnahmeraum 20 injiziert. Der Übersicht halber ist diese aushärtbare Masse in Figur 1 nicht dargestellt. Dann wird der Abstandshalter 7 in den Aufnahmeraum 20 eingeschoben und dabei die aushärtbare Masse soweit verdrängt, dass der im Untergrund 3 befindliche Teil der Gewindestange 8 vollständig umhüllt und nach Aushärtung der Masse hierdurch verankert ist. Vorzugsweise wird der Abstandshalter 7 soweit eingeschoben, dass die dem Untergrund abgewandte Stirnseite 11 mit der Putzschicht 7 bündig abschließt. Nach Aushärten der Masse wird die axiale Position der Abstandshülse 9 auf der Gewindestange 8 durch Verdrehen justiert. Eine Justage kann beispielsweise bedeuten, dass der Gegenstand 2 exakt vertikal ausgerichtet wird. Da die Gewindestange 8 vorzugsweise beim Aushärten der Masse so weit wie möglich in die Abstandshülse 9 eingeschraubt ist, bedeutet eine Justage stets, dass die Abstandshülse mit ihrer dem Untergrund 3 abgewandten Stirnseite 11 etwas über die Putzschicht 5 hinausragt. Hierdurch wird erreicht, dass der Gegenstand 2 auf jeden Fall nicht gegen die Putzschicht 5, sondern gegen die Abstandshülse 9 verspannt und damit eine mögliche Beschädigung der Putzschicht 5 vermieden wird. Die so durch Justage bestimmte Position der Abstandhülse 9 gegenüber der Gewindestange 8 wird durch Anziehen der Madenschraube 10 fixiert, da diese die Gewindestange 8 kontert. Im Weiteren wird der Gegenstand 2 auf die Abstandhülsen 9 aufgesetzt und durch die Unterlegscheiben 12 und die Befestigungsschrauben 13 fixiert.

Sollte es bei hohen Querbelastungen zu einer Biegung der Abstandshalter 7 kommen, so sichert die Außendurchmesserverjüngung 15, dass die Abstandshülse 9 nicht an die Putzschicht 5 anstößt und hierdurch zu Beschädigungen führt. Dies ist wichtig, da die Putzschicht 5 üblicherweise im Gegensatz zu der relativ weichen Dämmschicht 4 spröde ist.

Um einen thermischen Energiefluss (sog. "Wärmebrücke") so weit wie möglich zu vermeiden, ist sowohl die Abstandhülse 9 als auch die Madenschraube 10 aus Kunststoff oder einem ähnlichen, wenig thermisch leitenden Werkstoff hergestellt. Dagegen ist die Gewindestange 8 aus Stabilitätsgründen aus Stahl gefertigt.

## Patentansprüche

1. Abstandshalter (7) für die Befestigung eines Gegenstandes (2) an einem eine Dämmschicht (4) aufweisenden Untergrund (3), mit einem Ankerbolzen (8) und einer auf den Ankerbolzen (8) aufgeschraubten Abstandshülse (9),
**dadurch gekennzeichnet,**
- **dass** die Abstandshülse (9) eine Fräseinrichtung (14) an ihrem äußeren Umfang aufweist, und
- **dass** die Abstandshülse (9) an dem dem Ankerbolzen (8) abgewandten Ende eine Außendurchmesserverjüngung (15) aufweist.

2. Abstandshalter nach Anspruch 1, **dadurch gekennzeichnet, dass** die Abstandshülse (9) und der Ankerbolzen (8) in unterschiedlichen axialen Positionen gegen gegenseitiges Verdrehen sicherbar sind.

3. Abstandshalter nach Anspruch 2, **dadurch gekennzeichnet, dass** der Abstandshalter (7) eine axial verstellbare Kontereinrichtung (10) für den Ankerbolzen (8) aufweist.

4. Abstandshalter nach Anspruch 3, **dadurch gekennzeichnet, dass** die Kontereinrichtung eine Madenschraube (10) ist.

5. Abstandshalter nach Anspruch 1, **dadurch gekennzeichnet, dass** die Abstandshülse (9) eine sich in Richtung des Ankerbolzens (8) konisch verjüngende Außenkontur aufweist.

6. Abstandshalter nach Anspruch 1, **dadurch gekennzeichnet, dass** die Abstandshülse (9) eine Werkzeugaufnahme (16) aufweist.

7. Abstandshalter nach Anspruch 1, **dadurch gekennzeichnet, dass** die Abstandshülse (9) eine Aufnahmebohrung (19) mit Gewinde für eine Befestigungsschraube (13) aufweist.

8. Abstandshalter nach Anspruch 2, **dadurch gekennzeichnet, dass** die Abstandshülse (9) ein Kunststoffteil ist.

9. Abstandshalter nach Anspruch 1, **dadurch gekennzeichnet, dass** der Ankerbolzen eine Gewindestange (8) ist.

## Claims

1. Spacer (7) for fastening an article (2) to a substrate (3) provided with an insulating layer (4), having an anchor bolt (8) and a spacer sleeve (9) screwed onto the anchor bolt (8),
**characterised in that**
- the spacer sleeve (9) has a milling device (14) on its external circumference, and
- **in that** the spacer sleeve (9) has, at the end remote from the anchor bolt (8), a narrowing (15) in its external diameter.

2. Spacer according to claim 1, **characterised in that** the spacer sleeve (9) and the anchor bolt (8) are arranged to be secured in different axial positions against rotation with respect to one another.

3. Spacer according to claim 2, **characterised in that** the spacer (7) has an axially positionable locking device (10) for the anchor bolt (8).

4. Spacer according to claim 3, **characterised in that** the locking device is a grub screw (10).

5. Spacer according to claim 1, **characterised in that** the spacer sleeve (9) has an external contour that tapers conically in the direction of the anchor bolt (8).

6. Spacer according to claim 1, **characterised in that** the spacer sleeve (9) has a tool application recess (16).

7. Spacer according to claim 1, **characterised in that** the spacer sleeve (9) has a receiving bore (19), provided with a thread, for a fastening screw (13).

8. Spacer according to claim 2, **characterised in that** the spacer sleeve (9) is a plastics part.

9. Spacer according to claim 1, **characterised in that** the anchor bolt is a threaded rod (8).

## Revendications

1. Écarteur (7) pour la fixation d'un objet (2) sur un support (3) présentant une couche d'isolation (4), avec un boulon d'ancrage (8) et avec une douille d'écartement (9) vissée sur le boulon d'ancrage (8),
**caractérisé**
- **en ce que** la douille d'écartement (9) présente un moyen fraiseur (14) sur son pourtour extérieur,
- et **en ce que** la douille d'écartement (9) présente, à l'extrémité opposée au boulon d'ancrage (8), un rétrécissement (15) du diamètre extérieur.

2. Écarteur selon la revendication 1, **caractérisé en ce que** la douille d'écartement (9) et le boulon d'ancrage (8) peuvent être bloqués en rotation relative dans différentes positions axiales.

3. Écarteur selon la revendication 2, **caractérisé en ce que** l'écarteur (7) présente un moyen de blocage (10) axialement mobile pour le boulon d'ancrage (8).

4. Écarteur selon la revendication 3, **caractérisé en ce que** le moyen de blocage est une vis sans tête (10).

5. Écarteur selon la revendication 1, **caractérisé en ce que** la douille d'écartement (9) présente un contour extérieur qui se rétrécit coniquement en direction du boulon d'ancrage (8).

6. Écarteur selon la revendication 1, **caractérisé en ce que** la douille d'écartement (9) présente une partie réceptrice d'outil (16).

7. Écarteur selon la revendication 1, **caractérisé en ce que** la douille d'écartement (9) présente un alésage récepteur fileté (19) pour une vis de fixation (13).

8. Écarteur selon la revendication 2, **caractérisé en ce que** la douille d'écartement (9) est une pièce en matière plastique.

9. Écarteur selon la revendication 1, **caractérisé en ce que** le boulon d'ancrage est une tige filetée (8).
